Europäisches Patentamt

European Patent Office

Office européen des brevets

(19)

(11) Veröffentlichungsnummer: **0 135 614**
**B1**

(12) **EUROPÄISCHE PATENTSCHRIFT**

(45) Veröffentlichungstag der Patentschrift:
08.10.86

(21) Anmeldenummer: 83110584.6

(22) Anmeldetag: 22.10.83

(51) Int. Cl.⁴: **B 01 D  46/04,** B 01 D  46/24,
D 01 H  11/00

(54) **Vertikal angeordneter Schlauchfilter.**

(30) Priorität: 25.08.83  CH 4632/83

(43) Veröffentlichungstag der Anmeldung:
03.04.85 Patentblatt 85/14

(45) Bekanntmachung des Hinweises auf die Patenterteilung:
08.10.86 Patentblatt 86/41

(84) Benannte Vertragsstaaten:
AT BE DE FR GB IT NL SE

(56) Entgegenhaltungen:
DE - B - 2 712 102
FR - A - 2 309 267
FR - A - 2 350 866
US - A - 1 887 052

(73) Patentinhaber: GEBRÜDER SULZER
AKTIENGESELLSCHAFT, Zürcherstrasse 9,
CH-8401 Winterthur (CH)

(72) Erfinder: Jassniker, Kurt, Wartstrasse 82,
CH-8400 Winterthur (CH)

(74) Vertreter: Dipl.-Ing. H. Marsch Dipl.-Ing. K. Sparing
Dipl.-Phys.Dr. W.H. Röhl Patentanwälte,
Rethelstrasse 123, D-4000 Düsseldorf (DE)

## Beschreibung

Die Erfindung betrifft einen vertikal angeordneten Filter, der mit einer gegen seinen Innenraum gerichteten Reinigungsvorrichtung für das Abblasen auf dem Filterkörper abgesetzter Verunreinigungen versehen ist, die anschliessend aus dem Innenraum entfernt werden, wobei die Reinigungsvorrichtung eine sich mindestens annähernd über die ganze Höhe des Filterkörpers erstreckende Druckkammer mit einem gegen diesen gerichteten, schlitzartigen Luftaustritt aufweist, und der Filterkörper mit einer Drehvorrichtung verbunden ist, die ihn am Luftaustritt der Druckkammer vorbei um eine Achse rotieren lässt.

Ein Filter der vorstehend genannten Art ist bekannt aus der DE-B-2712102; er dient zur Abscheidung von bei der Asphaltherstellung auftretenden heissen Flüssigkeits- und Feststoffemissionen. Sein Filterkörper besteht aus einzelnen Filtertafeln, die gegebenenfalls ausgetauscht und ausgewaschen werden. Neben diesem Austausch der Filtertafeln ist eine periodische Reinigung mit Hilfe von Druckluft vorgesehen, die in Gegenrichtung zu der zu filtrierenden Gasströmung von aussen nach innen durch den Filterkörper geblasen wird. Die Verunreinigungen werden dabei in eine Auffangkammer geblasen und über einen zentralen Schaft entnommen.

Bei der Anwendung der eingangs beschriebenen Reinigungsvorrichtung an Schlauchfiltern, deren Filterschlauch infolge des Gewichts freitragend ausgespannt ist, haben sich Schwierigkeiten ergeben. Es hat sich nämlich gezeigt, dass die Reinigungswirkung des in «verkehrter» Richtung geblasenen Luftstromes nicht in allen Fällen genügt und/oder zu relativ langen «Betriebszeiten» der intermittierend in Funktion stehenden Reinigungsvorrichtung führt. Derartige Schlauchfilter dienen unter anderem zur Reinigung von grossen Gasmengen, beispielsweise zur Reinigung der Abluft von Textilbetrieben oder anderen Industrien, wie Zement- oder Tabakindustrie.

Aufgabe der Erfindung ist es, einen Schlauchfilter zu schaffen, bei dem auch bei Anwendung der – im Gegensatz zu den bei vertikal angeordneten Schlauchfiltern bisher üblichen höhenverschiebbaren Blasvorrichtungen – «konstruktiv einfachen» eingangs beschriebenen Reinigungsvorrichtung eine rasche und wirkungsvolle Reinigung des Filterschlauches erreicht wird. Diese Aufgabe wird mit der Erfindung dadurch gelöst, dass der Filter als Schlauchfilter mit einem freitragend ausgespannten Filterschlauch ausgebildet ist, und dass ferner der Luftaustritt der Druckkammer gegen die Umgebung mit Hilfe von zwei elastischen, auf dem Filterschlauch aufliegenden Manschetten abgedichtet ist, womit auf dem Umfang des Filterschlauchs ein Bereich mit vorgegebener Mindestbreite abgedeckt ist.

Im Bereich der Blasvorrichtung steht dem reinigenden Blasstrahl dadurch kein oder nur ein geringer Gegendruck entgegen. Weiterhin wird der Wirkungsbereich des Blasstrahls in Umfangsrichtung des Filterschlauchs auf die Breite im Innern der Manschetten «erweitert». Insgesamt resultiert daraus eine verbesserte Reinigung des Filterschlauchs, woraus sich grosse Intervalle zwischen zwei Abblaszeiten ergeben, die selbst dadurch relativ kurz bemessen werden können. Bei einem bereits zu Versuchszwecken erstellten Filter für die Abluft eines Textilbetriebes wird beispielsweise der Ventilator der Blasvorrichtung – und gleichzeitig derjenige für die Absaugung sowie der Motor der Drehvorrichtung des Schlauchfilters – einmal pro Stunde für Zeiten unter einer Minute in Betrieb gesetzt, wobei die Rotation des Filterschlauchs mit 1 U/min erfolgt.

Um Schwankungen im Luftdurchsatz zwischen einem sauberen, gereinigten und einem bereits länger im Betrieb stehenden, verschmutzten Filterschlauch möglichst gering zu halten, ist das Druckintervall zwischen Einschalt- und Ausschaltdruck für die Blasvorrichtung relativ klein und beträgt bei dem erwähnten Filter etwa 50-80 Pa. Das Ein- und Ausschalten der Blasvorrichtung kann daher mit Vorteil von einem Pressostaten gesteuert werden, der den Druckabfall über den Filterschlauch misst.

Der Platzbedarf in vertikaler Richtung für den Schlauchfilter lässt sich verringern, wenn für die Abfuhr der Verunreinigungen eine Saugvorrichtung mit einem feststehenden Saugrohr vorgesehen ist, das über einem geschlossenen Boden des Schlauchfilters angeordnet und durch eine elastische Dichtung gegen den Boden abgedichtet ist.

Eine einfache und zweckmässige Lösung für eine drehbare Lagerung des Filters erhält man, wenn ein den Filterschlauch tragender Ringflansch auf mindestens drei Rollen mit horizontaler Achse drehbar gelagert und von mindestens drei auf seinem Umfang laufenden Rollen mit vertikaler Achse geführt und zentriert ist.

Eine gleichmässige vertikale Luftgeschwindigkeit im Innern des Filterschlauchs und ein verbesserter Abtransport der abgeblasenen Verunreinigungen lassen sich erreichen, wenn im Innenraum des Filterschlauchs ein sich nach oben verjüngender Konuskörper vorgesehen ist.

Im folgenden wird die Erfindung anhand von Ausführungsbeispielen im Zusammenhang mit der Zeichnung näher erläutert.

Fig. 1 zeigt eine Ausführungsform des neuen Filters schematisch, wobei der Filterschlauch, seine Aufhängung und Lagerung im Schnitt dargestellt sind;

Fig. 2 ist der Schnitt II-II von Fig. 1 in grösserem Massstab;

Fig. 3 und 4 sind in gleicher Darstellung wie Fig. 1, zwei Varianten des unteren Endes des Schlauchfilters;

Fig. 5 ist der Schnitt V-V von Fig. 4, während

Fig. 6 eine gegenüber Fig. 1 geänderte Möglichkeit für die Aufhängung des Schlauchfilters wiedergibt.

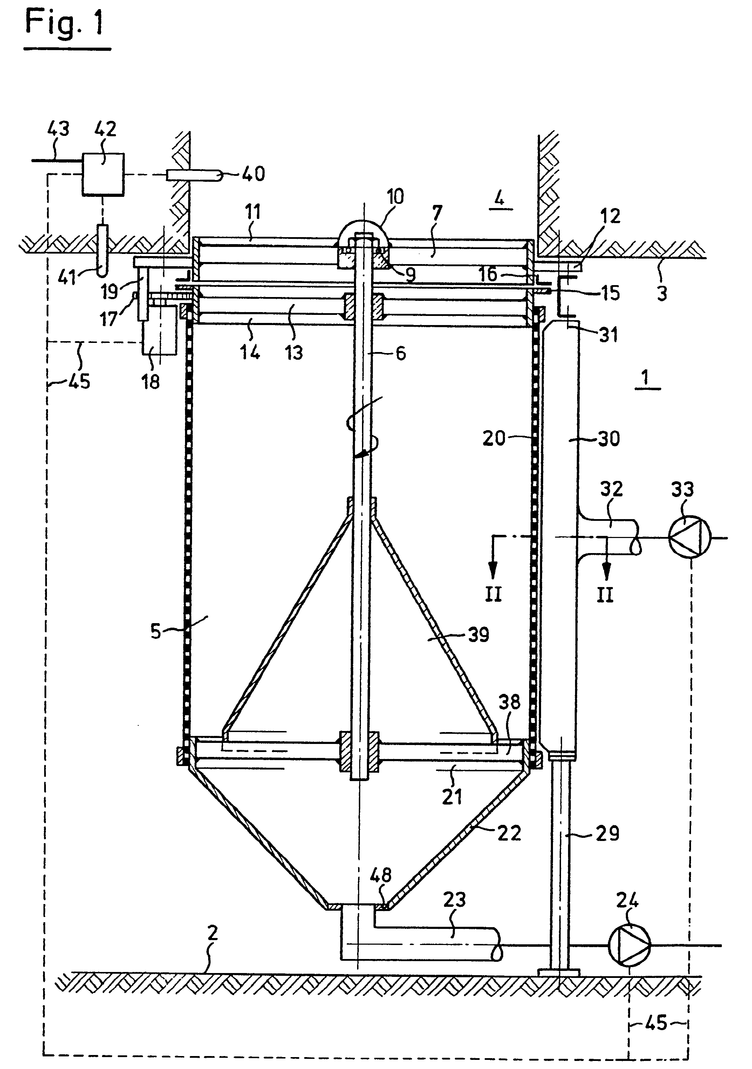

In eine Filterkammer 1 (Fig. 1), von der nur ein Teil des Bodens 2 und der Decke 3 angedeutet ist, mündet ein Zuführkanal 4 für verschmutzte Luft, z.B. ein Abluftkanal eines Textilbetriebes. An die Kanalöffnung in der Decke 3 schliesst sich in die Filterkammer 1 hinein der Schlauchfilter 5 an; er ist mit seiner Welle 6 an einem, den Kanal 4 diametral durchsetzenden Querbalken 7 aufgehängt. Der Querbalken 7, in dem für das Lager 9 der Welle 6 eine Verkleidung 10 vorgesehen ist, wird gehalten durch einen Deckenring 11, der seinerseits über Flansche 12 an der Decke 3 befestigt ist.

Der eigentliche Schlauchfilter 5 enthält einen oberen, mit Speichen 13 versehenen Tragring 14, der einen Ringflansch 15 trägt, auf dem eine am Deckenring 11 befestigte elastische Dichtung 16 aufliegt. Der Tragring 14 ist mit der Welle 6 fest verbunden, beispielsweise mit Hilfe von nicht gezeigten Klemmschrauben, verklemmt.

Gegen den äusseren Umfang des Tragrings 14 drückt als Rotationsantrieb für den Schlauchfilter 5 ein Reibrad 17, das von einem Elektromotor 18 angetrieben ist. Dieser ist über einen Träger 19 selbsttragend am Flansch 12 gehalten. Am Tragring 14 ist weiterhin der Filterschlauch 20 mit bekannten Mitteln befestigt, an dessen unteren Ende ein ebenfalls auf der Welle 6 sitzender unterer Bodenring 21 von gleicher Konstruktion wie der Tragring 14 vorhanden ist. Der Filterschlauch 20 besteht beispielsweise aus einem Textil- oder Drahtgewebe oder aus einem anderen geeigneten Filtermaterial, wie z.B. einem Vlies oder einem Schaumstoff.

An den Bodenring 21 ist ein Sammeltrichter 22 für die abgeblasenen Verunreinigungen angesetzt, in dessen Trichterboden eine Saugleitung 23 mündet. Da der Trichter 22 mit dem Filterschlauch 20 rotiert, die Leitung 23 jedoch feststeht, befindet sich zwischen beiden eine elastische Dichtung 48. In der Leitung 23 ist ein Saugventilator 24 für das Absaugen der gesammelten Verunreinigungen vorgesehen.

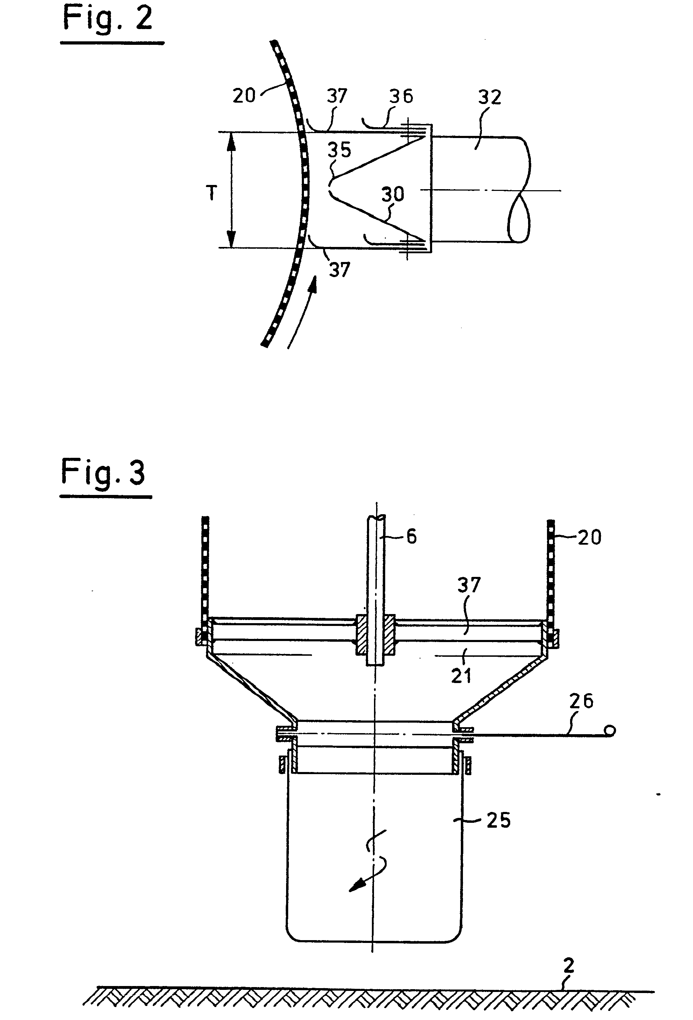

Statt einer Absaugung kann der Trichter 23 auch in einem einfachen Filtersack 25 (Fig. 3) enden, in den die Verunreinigungen aufgrund der Schwerkraft gelangen. Während des periodisch notwendigen Auswechselns des Filtersacks 25 kann der Trichterboden mit Hilfe eines Abschlussorgans 26 verschlossen werden.

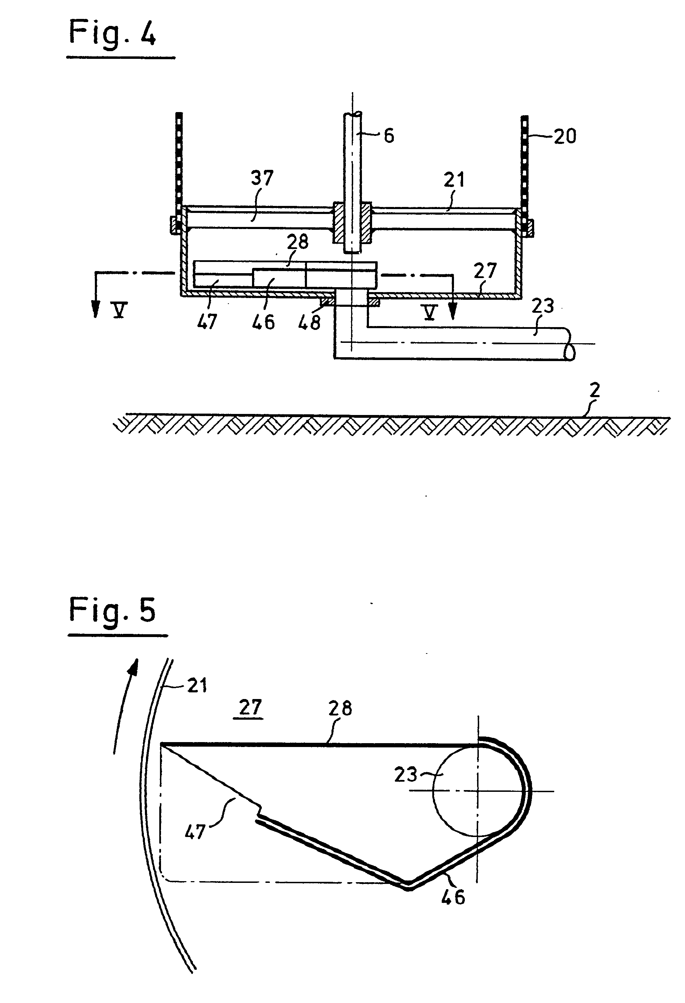

Eine weitere Variante, bei der die unter dem Filterschlauch 20 für die Abfuhr der Verunreinigungen benötigte Höhe besonders gering ist, besteht in einem, den Trichter 22 ersetzenden, Boden 27 (Fig. 4), über dem ein Saugrohr 28 angeordnet ist. Dieses ist seinerseits dann mit der Saugleitung 23 verbunden.

Auf den Speichen 38 des Bodenrings 21 ruht ein Konuskörper 39, der die Aufgabe hat, durch Verkleinerung des Innenraumvolumens während des Filterbetriebes die gleichmässige Luftgeschwindigkeit über die Höhe des Filterschlauchs 20 zu verbessern und bei dessen Reinigung das Sammeln der abgeblasenen Verunreinigungen im Trichter 22 zu erleichtern.

An einer Stelle des Umfangs des gespannten Filterschlauchs 20 ist eine Druckkammer 30 vorgesehen, die sich längs einer Mantellinie über die ganze Höhe des Filterschlauchs 20 erstreckt. Sie ruht auf einem Ständer 29 und ist oben über ein Winkeleisen 31 am Flansch 12 gehalten. Die Druckkammer 30 wird über eine Leitung 32 von einem Ventilator 33 mit Druckluft versorgt; sie hat einen dreieckigen Querschnitt (Fig. 2) und einen gegen den Filterschlauch 20 gerichteten Luftaustrittsschlitz 35.

Gehalten von zwei Stützblechen 36 sind zwei elastische Manschetten 37 vorhanden, die auf dem sich in Pfeilrichtung (Fig. 2) an ihnen vorbeibewegenden Filterschlauch 20 aufliegen und einen Totraum T von einer Gesamt-Mindestbreite von beispielsweise 250 mm symmetrisch zum Austrittsschlitz 35 abdecken. Innerhalb der Manschetten 37, die oben und unten durch nicht gezeigte Querstücke in ihrem Umfang geschlossen sind, ist auf diese Weise kein gegen die Blasrichtung des Schlitzes 35 gerichtete Gegenströmung vorhanden. Dadurch wird die Reinigung des Filterschlauchs 20 durch die Blasvorrichtung verbessert, da die «Wirkungsbreite» des Austrittsschlitzes 35 auf die Breite des Totraumes T vergrössert und gleichzeitig begrenzt wird. Für gleiche Reinigungsleistung kann dadurch der Energiebedarf des Blasventilators 32 verringert werden.

Stromaufwärts des Schlauchfilters 5 im Kanal 4 und stromabwärts in der Filterkammer 1 sind je ein Messfühler 40 und 41 für die Messung des dort herrschenden Druckes vorgeshen. Beide Messfühler 40 und 41 sind an einen, über eine Speiseleitung 43 mit elektrischer Energie versorgten Pressostaten 42 angeschlossen, in dem aus beiden Messwerten die Druckdifferenz gebildet wird. Übersteigt diese einen einstellbaren oberen Grenzwert, so gibt der Pressostat 42 über Signalleitungen 45 Einschaltsignale für den Motor 18 und die nicht gezeigten Antriebe beider Ventilatoren 24, 33 aus. Unterschreitet die gemessene Druckdifferenz einen ebenfalls einstellbaren unteren Grenzwert wieder, so werden über die gleichen Signalleitungen 45 Ausschaltbefehle gegeben. Auf diese Weise steuert der Pressostat 42 je nach Bedarf den intermittierenden Betrieb des Blasventilators 33 des Absaugventilators 24 und des Motors 18 für eine Reinigung des Filterschlauchs 20.

Wie bereits früher erwähnt, erfolgt eine Reinigung des Filterschlauchs 20 in einem bereits ausgeführten Versuchsfilter etwa in stündlichen Intervallen, wobei die Einschaltdauer der Motoren und Ventilatoren etwa 1 min beträgt. Da der Motor 18 den Schlauchfilter 5 mit einer Rotationsgeschwindigkeit von etwa 1 U/min antreibt, vollendet der Schlauchfilter während einer Einschaltzeit also gerade etwa eine Umdrehung.

Bei beengtem Platz in der Höhe der Filterkammer 1 kann der Trichter 22 durch das Saugrohr 28 ersetzt sein. Dieses ist mit der Leitung 23 fest verbunden. Es bleibt daher fest im Raum, wenn sich der über eine Dichtung 48 dagegen bzw. gegen die Leitung 23 abgedichtete Boden 27 des Schlauchfilters 5 in Richtung des Pfeiles von Fig. 5 dreht. Das Saugrohr 28 ist eine im wesentlichen quaderförmige Haube, die sich über den Boden 27 radial nach aussen erstreckt. Im Bereich des Zentrums ist an ihr eine elastische Schürze 46 befestigt, die wie eine Dichtlippe auf dem Boden 27 aufliegt und bei dessen Drehung abgelagerte Verunreinigungen aus dem radial inneren Bereich in Richtung auf eine Saugöffnung 47 verschiebt, wo sie vom Ventilator 24 in das Saugrohr 28 und die Absaugleitung 23 hineingezogen werden.

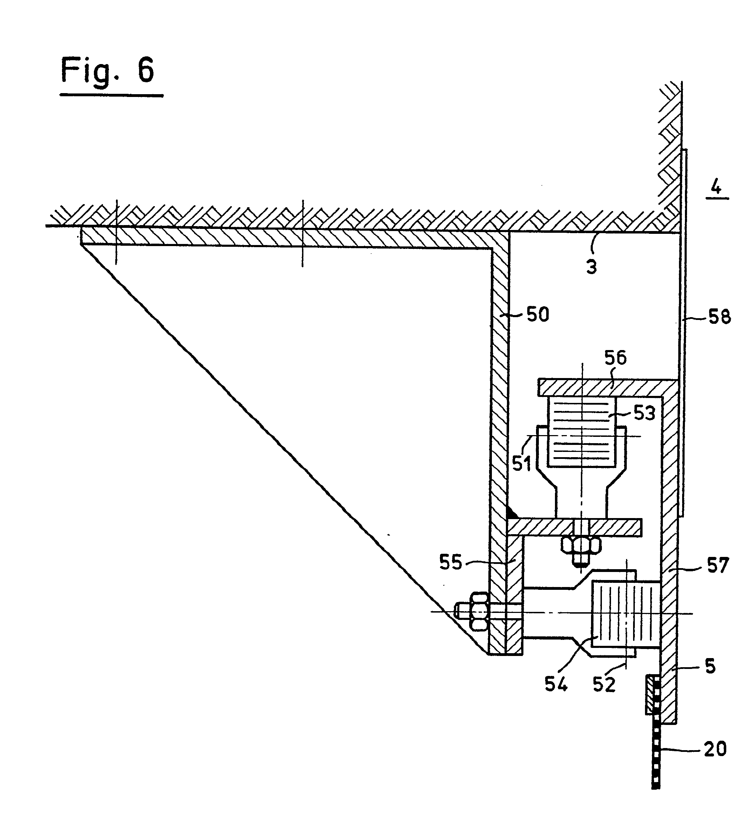

Fig. 6 stellt eine Variante der Aufhängung für den Schlauchfilter 5 dar. An der Decke 3 sind dabei auf einem Kreisumfang um den Kanal 4 herum gleichmässig verteilt drei Winkeleisen 50 und 55 befestigt, die je eine um eine horizontale und eine um eine vertikale Achse 51 bzw. 52 drehbare Rolle 53 bzw. 54 tragen. Auf der Rolle 53 der horizontalen Achse 51 ruht ein radial nach aussen gerichteter Flansch 56 eines speichenlosen Spannrings 57 für den Filterschlauch 20. Eine seitliche Führung und eine Zentrierung des Spannrings 57 erfolgt durch die Rollen 54 mit vertikalen Achsen 52. Der Antrieb des Schlauchfilters erfolgt auch bei dieser Anordnung über ein mit Reibung auf dem Spannring 57 abrollendes Reibrad 17, was nicht nochmals ausdrücklich dargestellt ist. Für die Abdichtung des verschmutzten Innenraums des Schlauchfilters 5 gegen die Filterkammer 1 ist im Kanal 4 eine elastische Dichtung 58 vorgesehen, deren freies Ende am inneren Umfang des Spannrings 57 anliegt.

## Patentansprüche

1. Vertikal angeordneter Filter, der mit einer gegen seinen Innenraum gerichteten Reinigungsvorrichtung für das Abblasen auf dem Filterkörper abgesetzter Verunreinigungen versehen ist, die anschliessend aus dem Innenraum entfernt werden, wobei die Reinigungsvorrichtung eine sich mindestens annähernd über die ganze Höhe des Filterkörpers erstreckende Druckkammer mit einem gegen diesen gerichteten, schlitzartigen Luftaustritt aufweist, und der Filterkörper mit einer Drehvorrichtung verbunden ist, die ihn am Luftaustritt der Druckkammer vorbei um seine Achse rotieren lässt, dadurch gekennzeichnet, dass der Filter als Schlauchfilter (5) mit einem freitragend ausgespannten Filterschlauch (20) ausgebildet ist, und dass ferner der Luftaustritt (35) der Druckkammer (30) gegen die Umgebung mit Hilfe von zwei elastischen, auf dem Filterschlauch (20) aufliegenden Manschetten (37) abgedichtet ist, womit auf dem Umfang des Filterschlauchs (20) ein Bereich (T) mit vorgegebener Mindestbreite abgedeckt ist.

2. Filter nach Anspruch 1, dadurch gekennzeichnet, dass die intermittierend in Betrieb stehende Reinigungsvorrichtung (30, 33, 24) von einem Pressostaten (42) gesteuert ist, der den Druckabfall durch den Filterschlauch (20) misst.

3. Filter nach Anspruch 1, dadurch gekennzeichnet, dass für die Abfuhr der Verunreinigungen eine Saugvorrichtung mit einem feststehenden Saugrohr (28) vorgesehen ist, das über einem geschlossenen Boden (27) des Schlauchfilters (5) angeordnet und durch eine elastische Dichtung (48) gegen den Boden (27) abgedichtet ist.

4. Filter nach Anspruch 1, dadurch gekennzeichnet, dass ein den Filterschlauch tragender Ringflansch (56, 57) auf mindestens drei Rollen (53) mit horizontaler Achse (51) drehbar gelagert und von mindestens drei auf seinem Umfang laufenden Rollen (54) mit vertikaler Achse (52) geführt und zentriert ist.

5. Filter nach Anspruch 1, dadurch gekennzeichnet, dass im Innenraum des Filterschlauchs (20) ein sich nach oben verjüngender Konuskörper (39) vorgesehen ist.

## Claims

1. A vertical filter having cleaning means which are directed towards its inner chamber and which are adapted for the removal by blowing of impurities deposited on the filter member, such impurities then being removed from the inner chamber, the cleaning means having a pressure chamber which extends at least substantially over the whole height of the filter member and which is formed with a slot-like air outlet directed towards the filter member, the same being connected to rotating means which rotate the filter member around its axis past the air outlet of the pressure chamber, characterised in that the filter is a bag filter (5) having an unsupported stretched out filter bag (20), and the air outlet (35) of the pressure chamber (30) is sealed off from the environment by means of two resilient strip seals (37) bearing on the filter bag (20), the seals (37) covering a zone (T) of a predetermined minimum width on the periphery of the filter bag (20).

2. A filter according to claim 1, characterised in that the intermittently operated cleaning means (30, 33, 24) are controlled by a pressostat (42) which measures the pressure drop through the filter bag (20).

3. A filter according to claim 1, characterised in that a suction device having a stationary suction tube (28) is provided to remove the impurities, the suction tube (28) being disposed above a closed base (27) of the filter bag (5) and being sealed relatively to the base (27) by a resilient seal (48).

4. A filter according to claim 1, characterised in that a ring flange (56, 57) carrying the filter bag is rotatably mounted on at least three rollers (53) having a horizontal axis (51) and is guided and centred by at least three rollers (54) which have a vertical axis (52) and which run on the periphery of the ring flange.

5. A filter according to claim 1, characterised in that an upwardly narrowing conical member (39) is provided in the interior of the filter bag (20).

## Revendications

1. Filtre à disposition verticale, équipé d'un dispositif de nettoyage dirigé vers son espace interne et destiné à chasser pneumatiquement des impuretés qui sont déposées sur le corps du filtre et sont ensuite expulsées de l'espace interne, le dispositif de nettoyage comportant une chambre de pression qui s'étend au moins approximativement sur toute la hauteur du corps du filtre et est pourvue d'une sortie d'air ayant la forme d'une fente et dirigée vers ledit corps, ce corps du filtre étant relié à un dispositif de rotation qui le fait tourner autour de son axe, en regard de la sortie d'air de la chambre de pression, caractérisé par le fait que le filtre est réalisé sous la forme d'un filtre (5) à garniture souple muni d'une garniture souple filtrante (20) tendue en porte-à-faux; et par le fait que la sortie d'air (35) de la chambre de pression (30) est en outre rendue étanche, par rapport à l'environnement, à l'aide de deux manchons élastiques (37) reposant sur la garniture souple filtrante (20), de sorte qu'une région (T) de largeur minimale prédéterminée est recouverte sur le pourtour de la garniture souple filtrante (20).

2. Filtre selon la revendication 1, caactérisé par le fait que le dispositif de nettoyage (30, 33, 24), en fonction par intermittence, est commandé par un pressostat (42) qui mesure la chute de pression à travers la garniture souple filtrante (20).

3. Filtre selon la revendication 1, caractérisé par le fait qu'il est prévu, pour l'évacuation des impuretés, un dispositif d'aspiration doté d'un tube fixe d'aspiration (28) qui est situé au-dessus d'un fond fermé (27) du filtre (5) à garniture souple, et dont l'étanchéité vis-à-vis de ce fond (27) est assurée par l'intermédiaire d'un joint élastique d'étanchéité (48).

4. Filtre selon la revendication 1, caractérisé par le fait qu'une bride annulaire (56, 57) portant la garniture souple filtrante est montée à rotation sur au moins trois rouleaux (53) à axe horizontal (51), en étant guidée et centrée par au moins trois rouleaux (54) à axe vertical (52) roulant sur son pourtour.

5. Filtre selon la revendication 1, caractérisé par le fait qu'il est prévu, dans l'espace interne de la garniture souple filtrante (20), une pièce conique (39) décroissant de section vers le haut.

**Fig. 1**   0 135 614

## Fig. 2

## Fig. 3

## Fig. 4

## Fig. 5

## Fig. 6